# EUROPEAN PATENT SPECIFICATION

(11) **EP 3 022 626 B1**
(45) Date of publication and mention of the grant of the patent: **14.08.2019**
(21) Application number: 14741857.8
(22) Date of filing: 17.07.2014
(51) Int. Cl.: G06F 3/0354, G06F 1/3234

(54) **ENERGY SAVINGS**
ENERGIEEINSPARUNGEN
ECONOMIES D'ÉNERGIE

(30) Priority: 17.07.2013 DE 102013214021
(43) Date of publication of application: 25.05.2016
(73) Proprietor: Stabilo International GmbH, 90562 Heroldsberg (DE)
(72) Inventor: KÄMPF, Karl-Peter, 91341 Röttenbach (DE)
(74) Representative: Grünecker Patent- und Rechtsanwälte PartG mbB
(86) International application number: PCT/EP2014/065428
(87) International publication number: WO 2015/007860

(56) References cited:
- US-A- 5 294 792
- US-A1- 2013 080 811
- US-A1- 2013 106 714
- US-A1- 2013 106 770

## Description

### State of the art

The invention relates to an electronic pen of the type as specified in the preamble of patent claim 1 and a method as specified in the preamble of patent claim 13.

The ever increasing use of electronic information and communication systems, especially of personal computers (PCs), laptops, tablets and smart phones in everyday life, leisure and work, makes it worthwhile to develop improvements of human-machine interfaces.

Besides human-machine interfaces such as a keyboard, mouse or touch-sensitive surfaces, electronic pens are especially of interest. Electronic pens have inter alia the advantage that they can combine the functionality and simplicity of writing with a pen on a surface with the much more numerous possibilities of electronic data processing. Thereby, it is desirable that the electronic pen is similar to a conventional pen as far as possible in appearance and handling.

In WO02/07424A2 for example, an electronic information system for handwriting recognition is described which has a pen and a tablet with pressure- or induction-sensitive surface and in which the movements of the pen or the pen tip are captured either from the pressure or induction-sensitive surface of the tablet or by acceleration sensors or optical sensors.

US 5,294,792 discloses an electronic pen with a force sensor, used for handwriting recognition, coupled to a writing lead.

US 2013/0106714 A1 and US 2013/ 0106770 A1 disclose active styli which can be operated in a plurality of operating modes and are able to generate electrical energy themselves.

The sensor data can then be transmitted wirelessly to a PC, which can, based on the received pen motion data, perform handwriting recognition.

A disadvantage of known electronic information systems for handwriting recognition however is among other things that an electronic pen in operation requires a relatively large amount of energy, in particular, when it needs to send data to the system, such as pressure sensor data for the writing pressure, which considerably affects the possible operating time of the electronic pen.

### Problem

It is therefore an objective of the invention to improve an electronic pen, especially with regard to its energy efficiency.

### Solution

The invention is defined by the appended independent claims. Further aspects of the invention are outlined in the dependent claims. Embodiments which do not fall within the scope of the claims do not form part of the present invention.

Therein, an electronic pen with pen position detection can comprise at least an electric voltage source, at least one digital control unit, a writing lead, at least one data transfer module and at least two position determination sensors, for example acceleration sensors, for determination of the position and / or motion of the electronic pen.

The term position determination sensors, which are suitable for determining the pen position and the pen movement, may for example comprise one- or two- or three-dimensional sensors, such as acceleration sensors and/or rotation rate sensors, wherein for example the motion of the electronic pen may be determined from of a simple integration of the sensor signal, for example from the acceleration signal, and the location or position of the electronic pen may be determined from a double integration of the sensor signal, for example the acceleration signal. For example it is possible that all the position determination sensors are acceleration sensors.

Said position determination sensors may in particular provide data, from which for example relative motions and the relative position of the electronic pen in space can be derived.

It is also conceivable that an additional magnetic field sensor for drift compensation can be used, which provides a stationary reference signal during stationary operation of the electronic pen, with which a drift of the integrated sensor signal can be compensated.

In addition, the electronic pen can have an energy management unit in communication with the digital control unit for managing electric energy consumption, and in particular to minimize the electric energy consumption, and / or comprise means to be able to generate electrical energy itself.

This has the advantage that the possible operating time or operational life of the electronic pen may be significantly extended, compared to electronic pens without energy management unit and / or without means for the self-generation of electric energy.

An electronic pen according to the invention therefore advantageously provides the opportunity at almost any time, without preparation, and especially with a for the user comfortable long period of use or active operating time, to serve as an input medium for everything that can be brought to a writing substrate by hand and / or can be controlled by gesture movement. It is possible that the electronic pen motion data can be provided in digital form for electronic processing, such as writing or gesture recognition, and / or for display, for example for display on an external electronic data processing unit such as an office computer, laptop, tablet computer or mobile phone.

Of course the electronic pen according to the invention can also be used conventionally, for example for writing or drawing with the writing lead, which for example can be operated with easy glide writing paste.

The electronic pen can have at least the following three different operation or operating modes with different energy consumption. An active mode, a standby mode and an off mode, wherein the energy management unit can manage said modes of operation and in particular can control changes of operating modes.

The active mode can further inter alia comprise a measurement mode, in particular for example to record the data of the position determination sensors, and further comprise a check mode, for example to check the voltage supply and / or to check the data transfer status and / or to check or verify the data derived from said position determination sensors.

Furthermore, it is possible that the off mode may also consume energy, since it may also be necessary in this mode to provide the electronic pen with electrical energy, for example in order to analyze or verify the state and / or the data of the electronic components, in particular the position determination sensors, e.g. acceleration sensors, and / or data transfer module, so that for example a user desired change from the off mode into a standby or active mode can be carried out.

The clock rates for the digital control unit and / or energy management unit or the sampling rate of the status inquiries for said electronic components can thereby lie below the clock rates or sampling rates which are used in standby mode or active mode.

Whereas for example in the active mode of the electronic pen a sampling rate of the data from the sensor elements, in particular from the position determination sensors, of at least 40 Hz may be required, in order to be able to sufficiently resolve a writing motion, the sampling rate in the standby mode and/or off mode can be reduced, and for example in the standby mode can lie around less than 40 Hz, preferably between 5 and 20 Hz, and can be reduced to 1 Hz or less in the off mode.

This sampling rate is to be distinguished from the communication or data transfer rate with which the data transfer module sends data, for example pen position data, energy state of voltage source, fill level of writing lead, writing pressure force etc., to a receiving system, such as for example an external data processing or data analysis unit. Thereby, said to-be-transferred data may be sent single and/or group wise, and/or data from one or several sampling cycles may be combined into one or several packages before they are sent to the receiving system. The communication or data transfer rate of, for example 0,2 to 5 or more communications per second in active mode can be reduced to less than 0,2 communications per second in standby mode.

In case of use of a suitable protocol, such as for example the low energy modus of the standard Bluetooth 4.0 (BLE), it is also possible that communications or data transfers are completely suspended.

In off mode, for example, the data transfer module can either be completely switched off, or only slow communication rates, for example of less than one communication per minute/hour/day or less/slower can be used.

In standby and/or off mode, it is further possible that the sensor system of some or of all data-providing electronic components of the electronic pen is partly switched off or only partly queried. That means for example, to query only one or two of several position determination sensors and/or other sensors in standby mode.

The digital control unit and/or the energy management unit can therefore, be configured such that the sampling rates of all data-providing components and/or the communication or data transfer rate of the data transfer module of the electronic pen can be controlled depending on the operating mode of the electronic pen.

Of course, it is also conceivable that, due to an active operation or activity of a user, for example by deploying or retracting the writing lead or activation of an on/off switch, the electronic pen can be switched on or off. An active on/off switch procedure may inter alia have the advantage that the energy consumption of the electronic pen in off mode can be minimized and in certain circumstances can even be completely switched off.

Since, however, it cannot be assumed that a user always switches off the electronic pen with an active user operation or activity when the electronic pen is not in use, it may be advantageous to identify the current state of use of the electronic pen by the energy management according to the invention by means of the energy management unit and based on the data of the electronic components, and to allow to change the operating mode based on the knowledge of the current state of use, in order to for example change into the off and/or standby mode of the electronic pen in case of a certain inactivity in the position and/or the motion of the electronic pen is recognized.

Thereby, it may be preferred and advantageous that a change of operating mode, or changes of operating modes, into a mode with higher energy requirements is/are performed with shorter latencies than a change of operating mode/changes of operating modes into a mode with lower energy requirements. In other words, a change into an active mode can be recognized and carried out faster than a change into the standby mode or the off mode since, for example, an inactivity in position and/or motion and/or ambient light of the electronic pen may, under certain circumstances, only indicate a short time interruption in the use of the electronic pen by the user.

The operating lifetime or usage time per battery charge of the electronic pen according to the invention can be at least 2, 3, 5, or 6 months, wherein the energy consumption of the electronic pen according to the invention, can amount to less than, for example, 3 mWh in active mode, less than 0,2 mWh in standby mode and less than 0,023 mWh in off mode.

The electrical operating voltages of the components of the electronic pen can lie for example between 1 and 10 V, preferably between 2 and 4 V.

Mentioned operating lifetimes may be achieved with a battery as voltage source. For example, with a 3 V voltage lithium button cell with 210 mAh or two zinc-air button cells each with 1.4 V and 650 mAh (type 975). The voltage source can be supported by means for the generation of electrical energy, as described further below. Thereby, it can be assumed that, per year (8760 hours) the electronic pen spends 20 to 700 hours in active mode, 16 to 560 hours in standby mode, and 8060 to 8740 hours in off mode.

The electronic pen can have at least one DC-to-DC converter.

This has the advantage that the electrical energy or electrical voltage provided by the means (see below) for the generation of electrical energy can, if required, be transformed to a desired electrical voltage level, since said means under some circumstances may not always a priori provide the electrical energy with the electrical voltage corresponding to the desired voltage for the operation of the electronic pen, or for the operation of electronic components of the electronic pen.

Besides the at least one electrical voltage source, the electronic pen may comprise an additional energy storage for self-generated electrical energy. For example, that energy storage can be a rechargeable battery.

Of course it is also conceivable that the at least one electrical voltage source can be configured such that it can be recharged with the self-generated electrical energy of the electronic pen, and for example be itself a rechargeable battery.

The electronic pen can comprise one or more photo cells, configured such that they can measure the light intensity in the environment of the electronic pen and, given a sufficient light intensity, can generate electrical energy, which can be provided to the electronic pen (for example at ambient or environment light intensities of greater than 50 lux). A photo cell may therefore be implemented as an exemplary means for electrical energy generation.

Preferably, the at least one photo cell can be configured such that it can measure the light intensity in the environment of the electronic pen and the energy management unit can be configured such that, when the light intensity, measured at the at least one or more photo cells, falls below a predetermined light intensity threshold (e.g. < 1 lux) for a predetermined light intensity falling below minimum duration (e.g. > 5 s or > 10 s) and/or when exceeding a predetermined light intensity threshold (e.g. > 1 lux) measured by the at least one or more photo cells for a predetermined excess minimum duration (e.g. > 1 s or > 5 s) the energy management unit can carry out at least one change of operating mode of the electronic pen, for example in case of a measured light intensity value falling below a predetermined light intensity threshold for said predetermined falling below minimum duration measured by a photocell, a change from the active mode into the off mode with or without an intermediate change into the standby mode can be carried out, and/or for example when a predetermined light intensity threshold is exceeded for a predetermined excess minimum duration, a change from the off mode into an active or the standby mode can be carried out.

This has inter alia the advantage that the energy consumption of the electronic pen can be reduced when the prevailing light conditions or light intensities in the environment of the electronic pen indicate that the electronic pen is not in use.

This situation, for example, may occur when the electronic pen lies within a bag, folder, or a piece of clothing, or the photo cell / photo cells is/are covered by a closing cap, or when the electronic pen or photo cell is covered by documents, or when it is simply too dark in the room in which the electronic pen is located because, for example after switching off the artificial room light or in case of lack of sufficient natural light. The active mode can furthermore be configured such that no electrical consumer is switched on.

Conversely, of course, the energy management unit of the pen may also carry out a change from the off mode into the standby mode and/or active mode, when the at least one photocell for example detects corresponding changes in the ambient light conditions, meaning that, for example, an excess of a predetermined light intensity threshold for a predetermined excess minimum duration (e.g. >1 s or > 5 s) occurs, for example after removal of a closing cap, the opening of a folder etc., indicating that the electronic pen shall/can be taken into use.

The energy management unit of the electronic pen can further be configured such that, by falling below a predetermined measurement activity threshold of the position determination sensors and/or other sensors for a predetermined falling below minimum duration (e.g. > 5 s, > 10 s or > 20 s) and/or for an excess of a predetermined mass activity threshold of the position determination sensors and/or other sensors for a predetermined excess minimum duration (for example >0.1 second or >1 second) the energy management unit can carry out at least one change of operating mode of the electronic pen.

For example, a predetermined measurement activity threshold can be a predetermined value of the actual pressure force of the writing lead, i.e. can be a predetermined writing pressure force value.

For said predetermined falling below minimum durations, for example falling below a predetermined axial pressure force value of the writing lead, for example in the absence of an axial pressure, the energy management unit can carry out at least one change of the operating mode of the electronic pen.

Similarly, for said predetermined excess minimum durations, for example due to exceeding a predetermined axial pressure force value of the writing lead, for example due to the occurrence of a positive axial pressure, or positive writing pressure, the energy management unit can carry out at least one change of operating mode of the electronic pen.

This optional feature can also advantageously reduce the energy consumption of the electronic pen. For example, if the electronic pen is laid aside, i.e. is laid out of the hand of the user for a longer time, this can be recognized by the falling below of a predetermined measurement activity threshold of the position determination sensors for said falling below minimum duration, and the energy management unit of the electronic pen can carry out an operating mode change into the standby mode and/or the off mode.

Conversely, in turn, of course, the energy managements unit of the electronic pen can also carry out a change from the off mode into the standby mode and/or active mode when, for example, from an excess of a predetermined measurement activity threshold of the position determination sensors and/or other sensors for a predetermined excess minimum duration, it can for example be deduced that the user has taken the electronic pen into his hand and the electronic pen shall be put to use, or can be put to use.

The electronic pen can further comprise a force sensor, which can be coupled to the writing lead.

This has inter alia the advantage that for example the axial pressure force or a writing pressure force can be measured and the energy management unit can be configured such that, in dependence of the force measured by the force sensor, for example when falling below a predetermined pressure force threshold (e.g. < 0,05 N) for a predetermined falling below minimum duration of for example > 5 s, > 10 s, or > 20 s, and/or in case of exceeding a predetermined pressure force threshold (for example > 0,05 N) for a predetermined excess minimum duration (e.g. > 0,1 s or > 1 s), the energy management unit can carry out at least one change of the operating mode of the electronic pen.

As previously described in the examples above, the energy consumption of the electronic pen can thereby advantageously be reduced and better managed. For example, the excess of a predetermined pressure force threshold for a predetermined excess minimum duration, for example caused by the contact of the writing lead with the writing substrate, for example paper, or due to the writing force pressure occurring during writing, the energy management unit can activate or change into the active mode of the electronic pen.

Conversely, for example in the absence of a sufficiently large writing pressure force or by falling below a predetermined pressure force threshold of a pressure force measured by the force sensor for a predetermined falling below minimum duration, the energy management unit can carry out an operating mode change from the active mode into the standby mode or off mode.

Besides the already mentioned possibility to generate electrical energy by means of a photo cell and to provide said electrical energy to the electronic pen, it is further conceivable that the electronic pen can be equipped with further components for electrical energy generation out of the environment and/or out of the use of the electronic pen. This concept may also be referred to as so-called energy harvesting. Therein, mainly a distinction between mechanical or kinetic and between photoelectric or thermoelectric methods for energy generation can be made. Here, it also should be mentioned that, while mechanical or kinetic methods for the generation of electric energy can be made available, mainly in the active mode, photoelectric and/or thermoelectric methods for the generation of energy can also be available in standby and/or off mode.

For example, the electronic pen may comprise one or a plurality of solar cells, which can generate electrical energy out of ambient light and provide it to the electronic pen.

Besides standard photovoltaic cells, also so-called photovoltaic concentrators may be used, which first capture incident light with optical elements and concentrate the captured light onto a photovoltaic cell, in order to increase the efficiency of the photovoltaic energy generation.

By means of said photoelectric methods, electrical energy gains of up to 0,13 mWh can be obtained and be made available to the electronic pen.

A thermoelectric generator can generate electrical energy from the presence of a temperature gradient according to the Seebeck-effect.

For example, a thermoelectric generator can use the temperature difference between the temperature of the hand of the user of the electronic pen and the ambient temperature. Thereby, for example, a part of the thermoelectric generator at a location or part of the electronic pen where the user of the electronic pen holds the electronic pen during writing, will receive the heat energy of the hand of the user and emit heat energy back to the environment at another exposed location of the surface of the electronic pen. In this case, for example, the ambient temperature lies below the temperature of the hand of the user.

However, the generation of electrical energy is also possible in the reverse case. That means, in the case when the ambient temperature is higher than the temperature of the hand of the user. Thereby, the part of the thermoelectric generator that is in contact with the environment of the electronic pen can receive heat energy from the environment and give off heat energy to the hand of the user by means of the part of the thermoelectric generator which is in contact with the hand of the user.

A further possible embodiment of the thermoelectric generator can comprise the use of an isolated heat storage in the inside of the housing of the electronic pen. Since the surface of the electronic pen, as compared to isolated heat storage, can faster follow temperature changes in the ambient temperature and/or temperature of the hand of the, a heat flow with alternating direction between the surface of the electronic pen and said heat storage can be created, from which electrical energy can be generated.

An electronic pen according to the invention can, by means of thermoelectric methods, advantageously generate electrical energy of up to 0,05 mWh or more.

Furthermore, the electronic pen can comprise a piezoelectric generator which can generate electrical energy and can make it available to the electronic pen.

During writing, a writing lead can for example push against the writing substrate with 0,3 N to 3 N, wherein for example writing lead displacements between 200 µm to 1000 µm can occur, i.e. each time between 60 µJ to 3000 µJ of energy can be mechanically generated. For example, in the case of 3 to 5 strokes or displacements of the writing lead per second, this can correspond to a mechanical power of 0,2 mW to 15 mW.

In consideration of efficiency of conversion losses, a piezoelectric generator of the electronic pen coupled to the writing lead can for example transform at least 20% to 50% of mechanical power into electrical power.

It is conceivable that a piezoelectric generator may be integrated, for example, into a force sensor coupled to the writing lead.

Moreover, the kinetic energy produced by translational and/or rotational movements during the use of the electronic pen may be accumulated in a tensioning device with springs and/or gear elements and/or with ratchet designs and can be converted into electrical energy via a piezoelectric generator.

For an electronic pen according to the invention, therefore, the electrical energy generation from mechanical or kinetic energy via piezoelectric methods can for example amount to up to 1 mWh or more.

As previously mentioned, the digital control unit and/or the energy management unit can be configured such that they can control the sampling rates of data providing components of the electronic pen, for example, the sampling rates of the position determination sensors and/or the photo cell and/or the force sensors and/or the magnetic field sensors, and/or the communication rate of the data transfer module, can be controlled depending on the operating mode of the electronic pen. Exemplary value ranges for sampling rates can thereby lie at greater or equal 40 Hz (active mode), less than 40 Hz, preferably 5 Hz to 50 Hz (standby mode), as well as at less or equal 1 Hz (off mode).

Exemplary value ranges of the communication rate or data transfer rate of the data transfer module can lie at 0,2 to 5 or more communications per second (active mode), less than 0.2 communications per second (standby mode), and for example longer than 1 communication per minute/ per hour/ per day (off mode), or in case the data transfer module is switched off at 0, meaning that no communication at all is sent.

Thereby, the sampling rates may also be adjusted and controlled by the energy management unit and/or the digital control unit for each sensor individually or for each data providing component of the electronic pen. Furthermore, only a subset of sensors may be queried.

These energy management options can measurably reduce the energy consumption of the electronic pen, and particularly in comparison to electronic pens without an energy management unit.

For an advantageous increase of the efficiency and energy efficiency of the data transfer module of the electronic pen, an electric conductor path from a circuit carrier of the electronic pen may be configured such that it can serve as antenna for the data transfer module.

A further way to improve the energy efficiency can be realized by using only acceleration sensors as position determination sensors, as they usually consume less energy than for example rotation rate sensors.

An apparatus for the electronic detection of pen positions can therefore comprise an electronic pen with any combination of the above-described features, as well as at least one data receiving module for receiving the data sent from the data transfer module of the electronic pen, as well as an external data processing unit to analyze and process the received data, a data display unit, and a data storage unit.

Advantageously, the data processing unit may comprise an energy management configuration unit, which can be used to configure the energy management unit of the electronic pen.

For example, it is conceivable that a user sets up different user profiles or energy management profiles, in which for example sampling rates of the sensor systems, clock rates of the digital control unit, sensor signal thresholds, etc., can be defined for different operating modes.

In addition, computational-intensive and/or storage-intensive processing steps for the pen position data of the electronic pen sent via the data transfer module and/or for pen status data may be outsourced to an external data processing unit or data analysis unit. This can also lead to or contribute to energy consumption savings of the electronic pen.

An apparatus according to the invention for electronic detection of pen positions may in addition comprise a writing substrate, wherein the writing substrate can be a touch-sensitive sensor surface or a conventional writing substrate, in particular, for example, paper.

In case of the use of a conventional writing substrate, such as writing paper, the data transfer rate can thereby advantageously be lower or reduced in comparison to the use of a touch-sensitive sensor surface as a writing substrate.

When the electronic pen is used on a conventional writing substrate, instead of for example a touch-sensitive sensor surface of a display, the data transfer rate of data sent from the pen to the receiving system can be significantly lower as compared to the case when it is directly written onto the display.

On said display, the data should be displayed with a delay of less than 50 ms in order for the user to see a feedback to the input in nearly real-time, since the writing is displayed on the display. This would require a data transfer rate of at least 20 Hz.

On the other hand, if the electronic pen writes on a conventional writing substrate, for example, by using a conventional writing lead, a display on the display in near real-time is not required, since the attention and focus of the writing user is directed towards the writing substrate.

In this case therefore, with the use of a conventional writing substrate, an electronic pen according to the invention could be operated with data transfer rates or data transfer frequencies of 1 Hz or less, which can lead to significant energy savings.

The electronic pen can therefore comprise means, which allow detecting the presence of a writing substrate or identifying the type of writing substrate. An identification of the writing substrate can, for example, be obtained by means of the mentioned force sensor, wherein, for example in case of an excess of a predetermined pressure force threshold (e.g. > 0,05 N) for a predetermined excess minimum direction (for example, > 0,1 s or > 1 s), the writing substrate can be identified as being writing paper.

On the basis of detection and identification of different types writing substrates, such as for example touch-sensitive sensor surfaces, writing paper, etc., wherein also non-solid writing substrates, for example air, can be recognized, for example due to falling below a pressure force threshold, or in the case of the absence of a writing pressure force, the data transfer module can be operated with different data transfer rates in the writing or active mode.

In a method for the electronic detection of pen positions according to the invention, the energy consumption of an electronic pen according to the invention may be managed by an energy management unit, wherein the electronic pen can generate at least part of the energy required for its operation itself, and wherein the electronic pen, via its data transfer module, can transmit data, in particular pen position data, to an external data processing unit or data analysis unit.

The following figures exemplify:
**Fig. 1**: Exemplary basic elements of an electronic pen according to the invention.
**Fig. 2**: Exemplary electronic pen according to the invention.
**Fig. 3**: A further exemplary electronic pen according to the invention.
**Fig. 4**: Exemplary state diagram of an electronic pen according to the invention.

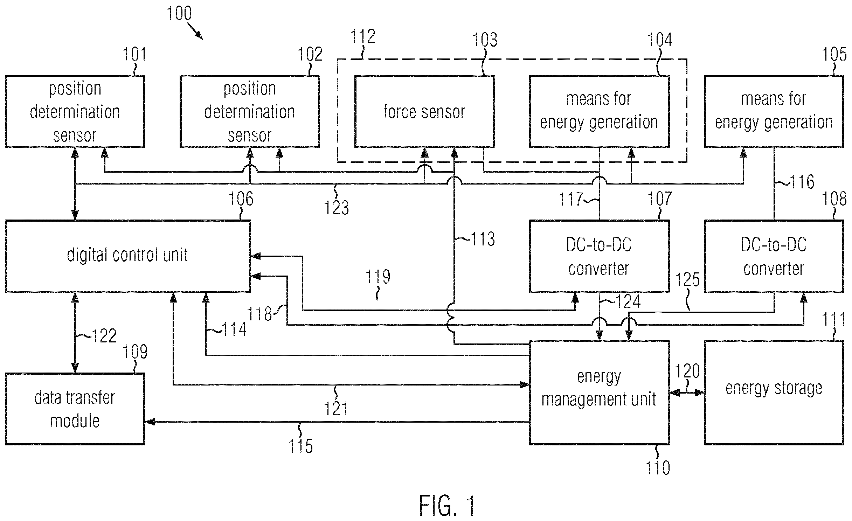

In **Fig. 1**, some of the basic components of an electronic pen according to the invention are exemplary shown schematically. These basic components can have all the features described above in any combination.

For example, in this case an electronic pen can have at least two position determination sensors 101, 102 in order to be able to determine the position and / or movement of the electronic pen.

In addition, the electronic pen can have a force sensor 103 which can be coupled to the writing lead of the electronic pen and that can measure a force analogous or proportional to the pressure force acting on the writing lead, which can occur for example when placing and / or moving the writing lead on a writing substrate.

The position determination sensors 101, 102 and the force sensor 103 can thereby be in communication 121, 113, 123 with both the digital control unit 106 and the energy management unit 110.

As described above, a piezoelectric generator may be integrated into the force sensor 103 to obtain electric energy by a so-called mechanical or kinetic energy harvesting from the movement of the writing lead.

In addition, to the means 112 for mechanical or kinetic energy harvesting, besides the force sensor 103, further means 104 can be used, which for example can accumulate translational and / or rotational kinetic energy, which can arise during the use of the electronic pen, for example, in a tensioning device of springs and / or gear wheel elements and / or ratchet designs, and which can be converted to electrical energy via a piezoelectric generator.

Furthermore, also means 105 for electrical energy generation may be used which, as described above, can be based on thermoelectric or photoelectric methods.

To make better use of the harvested energy for the operation of the electronic pen, the electrical energy generated from the force sensor and / or from means 104, 105 can be converted by a DC-to-DC converter 107, 108 to a desired suitable voltage.

The electrical energy generated may be passed to energy management unit 110 via electrical connections 117, 116, wherein said energy management unit 110 can be connected 120 to an energy storage 111 for electric energy, and, if necessary, can provide electric energy to electrical components, in particular to the data transfer module 109 and / or the position determination sensors 101, 102 and / or the force sensor 103 and / or the digital control unit 106 via electrical connections 115, 113, 114.

The energy management unit 110 may be in communication 121 with the digital control unit 106, and thus be indirectly in communication with all the other electronic components, as these may be connected to the digital control unit 106 via connections 118, 119, 121, 122, 123.

The DC-to-DC converter 107, 108 can be in communication with the energy management unit 110 via electrical lines 108 to 124, 125, for the transport of electrical energy.

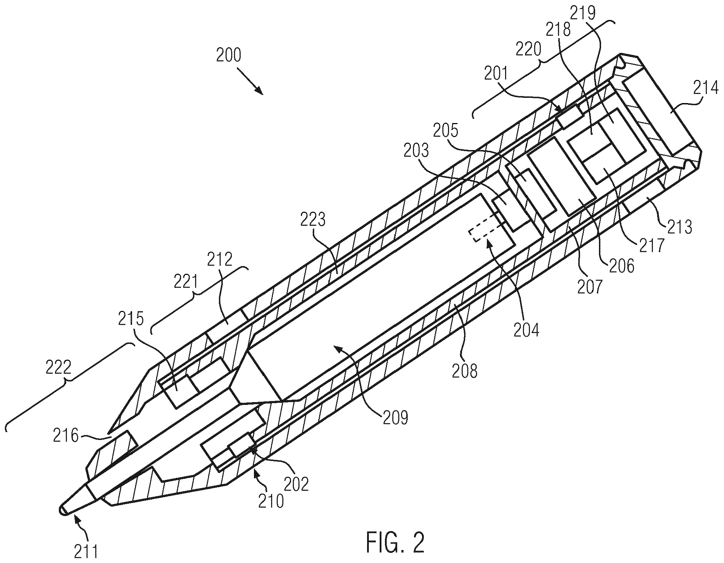

**Fig. 2** shows an example of a possible electronic pen 200 according to the invention.

It should be noted that all the features described above may be combined in any combination to achieve the described advantages described. For reasons of clarity however, only a part or an exemplary combination of the features described above is shown in Figure 2.

The electronic pen 200 may have a housing 210. Preferably, the housing 210 may have the geometry of a conventional pen, i.e. it may have for example a mainly cylindrical shape. Further conceivable are cuboidal or polyhedral housing forms, or cylindrical shapes with convex or concave polygonal cross sections.

The electronic pen 200 may have for example a length of between 90 mm and 200 mm, and average diameters between 5 mm to 20 mm.

The electronic pen 200 may include a writing lead 209, which can be held and encompassed by a second part 223 of a circuit carrier sleeve 208. The writing lead 209 may be coupled to a force sensor 203. The force sensor 203 may, as inter alia described above, for example measure the writing pressure force, as well as comprise a piezoelectric generator element 204 to generate electrical energy from movements of the writing lead 209 and provide it for the operation of the electronic pen 200.

The first part 207 of the circuit carrier sleeve 208 may contain, for example, a means for generating electrical energy, for example a piezoelectric generator 205, which can mechanically accumulate the kinetic energy of translational and / or rotational movements of the electronic pen, for example in a (not shown) tensioning device consisting of springs and / or gear wheel elements and / or via ratchet designs, and which can convert the accumulated mechanical energy into electrical energy.

Further, the part 207 of the circuit support sleeve 208 can accommodate a voltage source 206, for example a battery which, if necessary, may also be rechargeable.

Also a data transfer module 219, which can send the data of all electronic components of the electronic pen 200 to an external data processing unit (not shown) wirelessly may find place in this part 207 of the circuit carrier sleeve 208.

An energy management unit 218, which, as described above, can, for example in conjunction with a digital control unit 217, control and manage the electrical energy consumption, and in particular the means for electric energy generation, of the electronic pen 200, may also be located in this area of electronic pen 200 located, as well as a digital control unit 217, which can be in communication with the energy management unit 218 and all other electronic components of the electronic pen 200.

A first position determination sensor 201 may also be arranged at the part 207 of the circuit carrier sleeve 208. A second position determination sensor 202 may, for example, be located closer to the writing lead tip 211 in the second part 223 of the circuit carrier sleeve 208. The arrangement of the position determination sensors 201, 202 is only exemplary, as they may also be located on / at other parts of the circuit carrier sleeve 208 and / or the housing 210.

Part 207 of the circuit carrier sleeve can be encompassed by the housing part 220 of the electronic pen 200.

The end of the housing 210 lying opposite the tip of the writing lead 211, may include a further means of generating electrical energy, for example, a solar cell 214, which may be designed as a simple photovoltaic cell or as a photovoltaic concentrator (see above).

Another possible means for generating electric energy, as already mentioned above, can be based on a thermoelectric method. For that purpose a first part 212 of a thermoelectric generator may be integrated into the housing part 221, which, for example can be used by the fingers of the hand of the user of the electronic pen to hold the pen and to write with the pen.

A second part 213 of the thermoelectric generator can be arranged in the housing part 220, where a contact with the environment, particularly the ambient air, can be established.

In the presence of a temperature gradient between the two parts 212, 213 of the thermoelectric generator electrical energy can be generated by the Seebeck effect, as described above, and be provided to the electronic pen.

Inside the housing part 222 for example a photo cell 215 maybe arranged, which for example is capable of measuring the intensity of the incident ambient light through an opening 216 in the housing part 222 and can forward the measured data to the energy management unit 218 and / or to the digital control unit 217. As described above, for example, depending on the measured ambient light intensity, the energy management unit 218 can induce a change of operating mode, for example in the case of falling below a predetermined light intensity threshold for a given falling-below minimum duration, can induce a change from active mode to standby mode or to off mode of the electronic pen.

The electronic pen 200 may also comprise a closing cap (not shown), which for example may cover the opening 216, that is, the user can, for example by placing or removing a closing cap prevent or permit the incursion of ambient light on the photocell and thus indirectly cause a change of operating mode of the electronic pen 200, for example, in placing the closing cap cause a change of operating mode into the off mode and when taking off the cap cause a change of operating mode into standby mode or active mode.

The arrangement of the photocell 215 is only exemplary. It can also be located at a different housing part, and for example be arranged on the outer surface of the housing 210 as well as within the housing 210, i.e. for example in the case of an arrangement on the outer surface of the housing 210, no housing opening for receiving incident ambient light would be necessary.

The use of a plurality of photocells arranged at various housing locations is also conceivable. For example photocells can be located especially in the area of the housing part 222 where an unwanted covering of the photocell, e.g. by the fingers of the user when writing, is less likely.

Furthermore, the photocell 215 itself (or a plurality of photocells) can be implemented as an additional means of generating electrical energy, and can generate electric energy from the ambient light via a photo-electric effect and provide the electric energy to the electronic pen.

Instead of a photocell, a contact switch may be (not shown) mounted in the area of the closing cap seat at the housing part 221 or 222, in order for example to register plugging on the closing cap, and for example to trigger a change into the off mode.

The mentioned electronic components may be, analogous to the buildup described in Fig. 1, connected via electrical conductor paths (not shown), which can be used to transport electrical energy and / or data and / or control commands. The electrical conductor paths can thereby be integrated into the circuit carrier sleeve 208 and / or into the housing 210 of the electronic pen 200.

Furthermore the generated electrical energies, can, if necessary, be transformed to a desired operating voltage by DC-to-DC converters (not shown). The DC-to-DC converters may for example be integrated into the described means for generating / harvesting electrical energy.

The number, type, design and arrangements of the means for generating electrical energy described in Fig. 2 are only an exemplary.

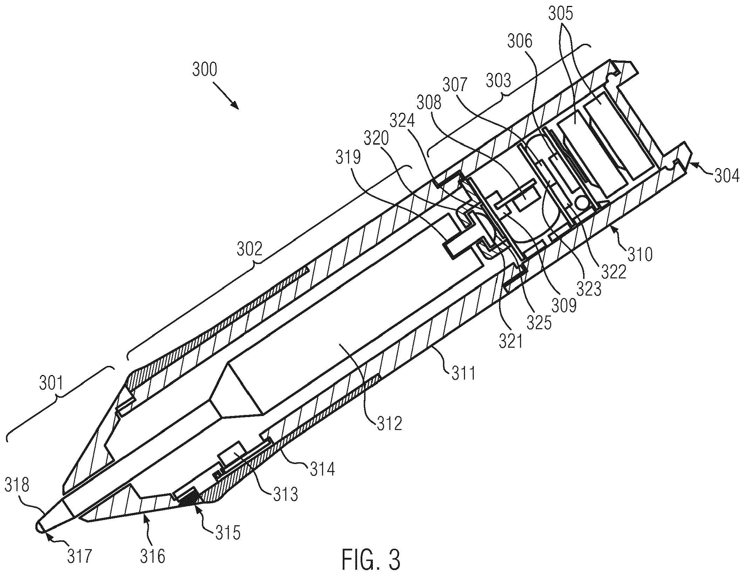

**Fig. 3** also shows an example of a possible electronic pen 300 according to the invention.

It should be pointed out once again that all features described above can be combined in any combination to achieve the previously described advantages. This means, for example, the electronic pen 300 may also have some or all of the features of the electronic pen 200.

For reasons of clarity however, only a part or an example of a combination of the features described above is shown in Figure 3.

The electronic pen 300 may have a housing 311 or sleeve. Preferably, the housing 311 may have the geometry of a conventional pen, i.e. it may have for example a mainly cylindrical shape. Further conceivable are cuboidal or polyhedral housing forms, or cylindrical shapes with convex or concave polygonal cross sections.

The electronic pen 300 may have for example a length of between 90 mm and 200 mm, and average diameters or average outer diameter of from 3 mm to 20 mm.

Said housing 311 of the electronic pen 300 may be divided for example in three housing parts, a first part 303, a second part 302 and a third part 301, which can be connected to each other via screw or plug connections.

The housing part 303 for example may comprise a housing end part 310 that can be screwed onto the housing part 302, and which may have an end cap 304 with a battery compartment cover.

Housing part 303 may, among other things, accommodate one or more voltage sources 305, for example zinc-air button cell batteries, such as Type 675 (1.4 V, 650 mAh).

Also a data transfer module 306, which can send the data of all electronic components of the electronic pen 300 to an external data processing unit (not shown) wirelessly may find place in this part 303 or 310 of the housing 311.

A control unit 307, for example comprising a digital control unit 323 and / or an energy management unit 322, for example comprising a microcontroller, may also be accomodated in the housing part 303 or 310.

The energy management unit 322, for example integrated into control unit 307, can, as described above, control and manage the electric energy consumption of the electronic pen in conjunction for example with a digital control unit 323, which also can be integrated into the control unit control 307, and in particular can control and manage the means for the electric energy generation.

The control unit 307, digital control unit 323 and energy management unit 322 can be connected with all other electronic components of the electronic pen 300, for example for transport of electrical energy and / or for communication of data and / or control commands.

Said connections for the transport of electrical energy and / or for communicating data and / or control commands can be realized by means of electrical conductor paths (not shown), which can for example be integrated into the housing 311.

One or more position determination sensors 308, which for example can be plugged perpendicular to a printed circuit board, may also be located in the housing part 303.

Positioning determination sensors 308 may for example be pluggable into a connector strip 309.

Another or more other position determination sensors 313 may be located closer to the writing lead tip 318, for example in the second part 302 of the housing 311.

Said position determination sensors 313, 308 can be acceleration sensors and / or rotation rate sensors and / or other sensors or magnetic field sensors.

The arrangement of position determination sensors 313, 308 is, moreover, only exemplary, they may also be located at or in other parts of the housing 311.

The electronic pen 300 may include a writing lead 312, which for example may have a writing lead tip 318, for example comprising nickel silver, and e.g. with a writing ball 317, for example from tungsten carbide, and for example having a diameter of 0,2 mm to 2 mm, preferably of 1.0 mm + / -0,2 mm.

The writing lead 312 can be coupled to a force sensor 321, for example by means of a pin 319 for frictionally receiving or connecting with the writing lead 312.

The pin 319 may end in a plate 325, which may be coated with a soft conductive material. Said plate 325 may, for example, press against a meandering path of a thin film resistor 324, so that a writing pressure force-dependent resistance can be established.

Besides the ability to measure a writing pressure force, the force sensor 321 may also have a piezoelectric generator element (not shown) in order to generate electric energy from movements of the writing lead 312, and to make the generated electrical energy available for the operation of the electronic pen 300.

To accommodate the force sensor 321 a hat cap 320 may be used, which may be inserted during the assembly of the electronic pen 300.

As exemplified for the electronic pen 200, the electronic pen 300 may also comprise additional means for generating electrical energy, e.g. a piezoelectric generator (not shown), which can convert the kinetic energy of translational and / or rotational movements of the electronic pen in use, mechanically accumulated, for example in a (not shown) tensioning device comprising springs and / or gear wheel elements, and / or by ratchet designs, into electrical energy.

Further means for generating electric energy, may for example comprise solar cells (not shown), which may be designed as simple photovoltaic cells or as photovoltaic concentrators.

Another possible means for generating electric energy, as already mentioned, can be based on a thermoelectric method. For that purpose a first part of a thermoelectric generator may be integrated into the housing part 302, which, for example can be used by the fingers of the hand of the user of the electronic pen to hold the pen and to write with the pen, for example a soft grip zone 314 (for example push-fitted during assembly).

A second part of the thermoelectric generator can for example be arranged in the housing part 310 or 303, where a contact with the environment, particularly the ambient air, can be established.

As previously described, in the presence of a temperature gradient between the two parts of the thermoelectric generator electrical energy can be generated by the Seebeck effect and be provided to the electronic pen 300.

The electronic pen 300 may for example also comprise at least one photo cell (not shown), which for example is capable of measuring the intensity of the incident ambient light and can forward the measured data to the energy management unit 322 and / or to the digital control unit 323. As described above, for example, depending on the measured ambient light intensity, the energy management unit 322 can induce a change of operating mode, for example in the case of falling below a predetermined light intensity threshold for a given falling-below minimum duration, can induce a change from active mode to standby mode or to off mode of the electronic pen 300.

It is also conceivable that, for example in the housing end part 316 at which the writing lead 312 can exit, for example, a contact switch 315 is provided which for example can register the acts of plugging / screwing and / or removal of a closing cap (not shown) and inform the energy management unit 322 and / or digital control unit 323 about the registration of said acts, in order for example to initiate a operating mode change, for example, a change from the active mode to standby mode or off mode of the electronic pen upon closure of the electronic pen 300 by means of the closing cap, or vice versa, a change from the off mode to the active mode or the standby mode of the electronic pen 300 during removal of the closing cap.

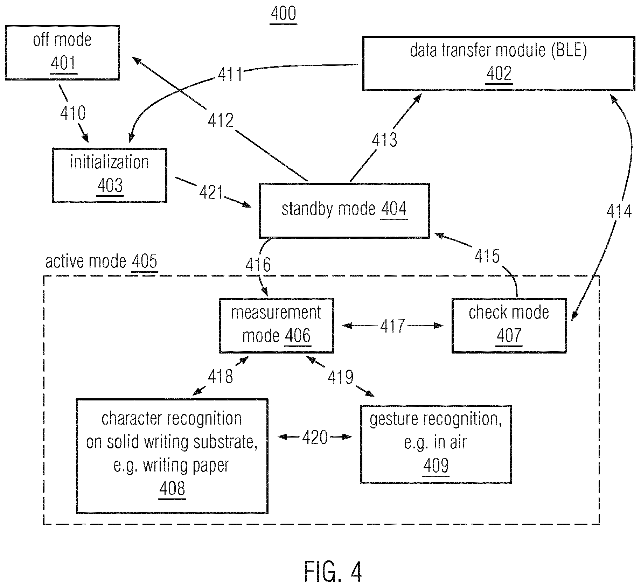

**Fig. 4** shows an example of a possible operating-mode-state diagram 400 of an electronic pen according to the invention, which may have some or all of the features of the electronic pens described above.

Thus, in particular, the electronic pen (not shown) may have an energy management unit (not shown), which may comprise all the features of previously described, and comprise and manage all modes of operation described in Fig. 4 (such as an active mode 405, standby mode 404, and off mode 401), and that can manage and / or can initiate and / or can control all operating mode changes.

An active mode 405 may further comprise a measurement mode 406, in particular for example to register data on the position determination sensors and a check mode 407, for example to check the energy supply and / or to test the data transfer state and / or to examine the data obtained from said position determination sensors.

An operating mode change from off mode 401 of an electronic pen to standby mode 404, can for example be initiated 410 by removing a closing cap and / or by operating a contact switch and / or by activation of a photocell, wherein first an initialization 403 of the electronic pen can be carried out, which may include all or only some electronic components of the electronic pen, and which for example may be followed by a boot process 421 of the electronic pen.

Furthermore, it is conceivable that an initialization 403 of the electronic stylus may be triggered 411 externally, for example by data or commands sent from an external computer unit or data processing unit (not shown) and received by data transfer module 402, for example, a Bluetooth Low Energy (BLE) unit. Above all, however, said data transfer module 402 can receive measurement data and status data from the standby mode 404 and active mode 405 and send them to an external data processing unit (not shown).

A change of operating mode 412 (from standby or active mode) back into the off mode 401 may inter alia be triggered by putting on a closing cap and / or also by operating a contact switch and / or by covering a photocell and / or due to inactivity in the movement of the electronic pen, for example, when the electronic pen remains unmoved in a horizontal position for more than 60 s or 120 s.

Starting from the standby mode 404, a change into an active mode 405 of the electronic pen can be carried out for example by exceeding a predetermined measurement activity threshold by the position determination sensors (not shown) described above and / or by other sensors (not shown) for a predetermined excess minimum duration. For example, a change 416 from standby mode 404 into a measurement mode 406 of the electronic pen can be initiated by exceeding a measurement activity threshold of an acceleration sensor of the electronic pen.

In active mode 405 or measurement mode 406 for example, the sensor elements of the electronic pen, in particular the position determination sensors, can be queried with sampling rates of at least 40 Hz, while in the standby mode 404, said sampling rate can be less than 40 Hz, preferably lie around 5 Hz to 20 Hz, and in off mode 401 may be at less or equal to 1 Hz.

To distinguish whether the electronic pen in use in active mode 405 or measurement mode 406 is writing 408 on a solid writing substrate, such as writing paper or is conducting gesture movements 409 in the air, in turn, a measured excess of a measurement activity threshold or a falling below a measurement activity threshold of a sensory element of the electronic pen can be used.

For example, the occurrence 418 of a specific writing pressure force determined by the force sensor of the electronic pen, or the excess of a predetermined writing pressure force or writing pressure force threshold for a predetermined excess minimum duration, due to the contact of the writing lead of the electronic pen on the writing substrate, such as the writing paper, may initiate the recording or the detection of the pen position for character or handwriting recognition.

The absence 419 or the falling below a predetermined pressure force threshold for a falling-below minimum duration, may for example identify a gesture motion and initiate a gesture recognition 409, such as a gesture for a line-skip or a page change.

To avoid that, during activated character recognition mode or handwriting recognition mode 408 on solid writing substrate a short-lived removal of the writing lead of the electronic pen from the solid write substrate, for example when setting punctuations, an unintended mode change into the gesture recognition mode 409 is performed, it can be for example be defined that in case of temporary absence 420 or temporary drops below a predetermined pressure force threshold of for example less than 1 s, the electronic pen remains in character or handwriting recognition mode 408 on solid writing substrate.

Parallel to the measurement mode 406, a check mode 407 of the electronic pen may verify the data of the position determination sensors, for example with respect to a reference coordinate system, and may monitor and/or control the stability of the data connection of the data transfer module 402 to an external data processing unit (not shown), and further check whether the voltage supply of the electronic pen is sufficient. Thereby the check mode 407 may be in communication 414 with the data transfer module 402.

In case the connection of the data transfer module 402 to an external data processing unit is aborted for more than 5 s or 8 s, for example a change 415 from the active mode 405 into the standby mode 404 can be carried out. Such a change 415 from the active mode 405 into the standby mode 404 can of course also be triggered by an inactivity in the movement of the electronic pen and measured by the position determination sensors, for example, by falling below a predetermined measurement activity threshold of the position determination sensors or other sensors for a falling below minimum duration (e.g. > 5 s or > 10 s or > 20 s).

Four sheets with 4 figures are following.

The reference numbers are thereby assigned as follows.
**100** exemplary basic elements of an electronic pen according to the invention
**101** position determination sensor
**102** position determination sensor
**103** force sensor
**104** means for energy generation, for example from mechanical or kinetic energy
**105** means for energy generation, for example from thermoelectric and/or photoelectric methods
**106** digital control unit
**107** DC-to-DC converter
**108** DC-to-DC converter
**109** data transfer module
**110** energy management unit
**111** energy storage
**112** entirety of means for the energy generation from mechanical or kinetic energy
**113** connection / conductor path for transporting electrical energy
**114** connection / conductor path for transporting electrical energy
**115** connection / conductor path for transporting electrical energy
**116** connection / conductor path for transporting electrical energy
**117** connection / conductor path for transporting electrical energy
**118** connection / conductor path for communicating data and / or control commands
**119** connection / conductor path for communicating data and / or control commands
**120** connection / conductor path for transporting electrical energy and / or control commands
**121** connection / conductor path for communicating data and / or control commands
**122** connection / conductor path for communicating data and / or control commands
**123** connection / conductor path for communicating data and / or control commands
**124** connection / conductor path for transporting electrical energy
**125** connection / conductor path for transporting electrical energy
**200** exemplary electronic pen
**201** position determination sensor
**202** position determination sensor
**203** force sensor that can be coupled to a writing lead
**204** optional piezoelectric generator element of force sensor
**205** additional piezoelectric generator
**206** voltage source, e.g. battery
**207** first part of circuit carrier sleeve
**208** circuit carrier sleeve
**209** writing lead
**210** housing of electronic
**211** writing lead tip
**212** first part of a thermoelectric generator
**213** second part of a thermoelectric generator
**214** solar cell
**215** photo cell
**216** opening
**217** digital control unit
**218** energy management unit
**219** data transfer module
**220** housing part of the electronic pen
**221** housing part of the electronic pen, e.g. preferred grip zone for fingers of the user
**222** housing part of the electronic pen, e.g. housing part at which the writing lead can exit
**223** second part of circuit carrier sleeve
**300** exemplary electronic pen
**301** third part of housing / casing of electronic pen
**302** second part of housing / casing of electronic pen
**303** first part of housing / casing of electronic pen
**304** end cap with battery compartment cover
**305** voltage source(s), e.g. battery/batteries, for example zinc-air button cell batteries
**306** data transfer module, e.g. BLE-module
**307** control unit comprising a digital control unit and / or an energy management unit, for example comprising a microcontroller
**308** position determination sensor(s), which for example can be plugged perpendicular to a printed circuit board or be plugged into a connector strip
**309** connector strip for receiving position determination sensor(s)
**310** first housing end part of electronic pen of screw type, i.e. can be screwed onto sth.
**311** housing / casing of electronic pen
**312** writing lead
**313** position determination sensor(s)
**314** soft grip zone / push-fittable soft grip zone
**315** contact switch
**316** second housing end part, e.g. of screw type, for example cone shaped, from which the writing lead can exit
**317** writing ball
**318** writing lead tip
**319** pin for frictionally receiving or connecting with the writing lead
**320** hat cap, for example inserted during the assembly of the electronic pen, for receiving the force sensor to measure writing pressure force or axial pressure force
**321** force sensor
**322** energy management unit
**323** digital control unit
**324** thin film resistor
**325** pin plate
**400** exemplary operating-mode-state diagram
**401** off mode
**402** data transfer module, e.g. BLE-module
**403** initialization
**404** standby mode
**405** active mode
**406** measurement mode
**407** check mode
**408** character recognition on solid writing substrate
**409** gesture recognition
**410** start / trigger of initialization
**411** external start / trigger of initialization
**412** change of operating mode
**413** communication(s) between standby mode and data transfer module
**414** communication(s) between active mode or check mode and data transfer module
**415** change of operating mode
**416** change of operating mode
**417** communication(s) between measurement mode and check mode
**418** occurrence of a writing pressure force
**419** absence of a writing pressure force
**420** temporary absence of a writing pressure force
**421** boot process

## Claims

1. Electronic pen (200) with pen position detection comprising at least one electric voltage source (206), at least a digital control unit (217, 106), a writing lead (209), at least one data transfer module (219, 109) and at least two position determination sensors (201, 202 , 101, 102) for determination of the position and / or motion of the electronic pen (200), a force sensor (203, 103) coupled to the writing lead (209) which is suitable for writing on paper,
**characterized in that**
the electronic pen (200) comprises an energy management unit (218, 110) in communication with the digital control unit (217, 106) for managing the electrical energy consumption, in particular to minimize the electric energy consumption, and optionally comprises means (103, 104, 105, 204, 205, 212, 213, 214, 215) to be able to generate electrical energy itself, and wherein the digital control unit (217, 106) and / or the energy management unit (218, 110) is / are configured such that the sampling rates of data providing components of the electronic pen, e.g. the sampling rates of the position determination sensors (201, 202, 101, 102) and / or of a photo cell (215) and / or of the force sensor (203, 103), and/or the data transfer rate of the data transfer module (219, 109) can be controlled depending on the operating mode of the electronic pen (200), and wherein the energy management unit (218, 110) is configured such that depending on the force measured by the force sensor (203, 103), in particular in the case of falling below a predetermined pressure force threshold for a predetermined minimum duration and / or in the case of exceeding a predetermined pressure force threshold for a predetermined excess minimum duration, the energy management unit (218, 110) carries out at least one change of the operating mode of the electronic pen (200).

2. Electronic pen (200) according to claim 1, **characterized in that** it is configured so that it has at least the following three different operating modes with different energy consumption: an active mode (405), a standby mode (404), an off mode (401); and wherein the energy management unit (218, 110) can manage said modes of operation and in particular can control changes of operating modes.

3. Electronic pen (200) according to any one of the preceding claims, **characterized in that** the electronic pen (200) comprises at least one DC-to-DC converter (107, 108).

4. Electronic pen (200) according to any one of the preceding claims, **characterized in that** the electronic pen (200) comprises an additional energy storage (111) for self-generated electrical energy, and / or **in that** the electrical voltage source (206) is configured such, that it can be recharged with the self-generated electrical energy generated by the electronic pen (200).

5. Electronic pen (200) according to any one of the preceding claims, **characterized in that** it comprises at least one photo cell (215) which is configured such that it can measure the light intensity in the environment of the electronic pen (200), and which is further configured such that it can, given a sufficient light intensity, generate electrical energy and provide it to the electronic pen (200).

6. Electronic pen (200) according to any one of the preceding claims, **characterized in that** it comprises at least one photo cell (215) which is configured such that it can measure the light intensity in the environment of the electronic pen (200), and **in that** the energy management unit (218, 110) is configured such that in case of falling below a predetermined light intensity threshold at the at least one photo cell (215) or at more photocells for a predetermined falling below minimum duration and/or in the case of exceeding a predetermined light intensity threshold for an excess minimum duration, the energy management unit (218, 110) carries out at least one change of the operating mode of the electronic pen (200), in particular in the case of the at least one photo cell (215) measuring a falling below a predetermined light intensity threshold for a predetermined falling below minimum duration carries out a change from the active mode into the off mode, with or without an intermediate change into the standby mode, and / or in particular in the case of exceeding a predetermined light intensity threshold for an excess minimum duration carries out a change from the off mode into the active mode or standby mode.

7. Electronic pen (200) according to any one of the preceding claims, **characterized in that** the energy management unit (218, 110) is configured such that, in the case of falling below a predetermined measurement activity threshold of the position determination sensors for a predetermined falling below minimum duration and / or in the case of exceeding predetermined measurement activity threshold of the position determination sensors for a predetermined excess minimum duration, the energy management unit (218, 110) carries out at least one change of the operating mode of the electronic pen (200).

8. Electronic pen (200) according to any one of the preceding claims, **characterized in that** it comprises at least one solar cell (214) and / or at least one thermoelectric generator (212, 213) and / or at least one piezoelectric generator (204, 205), which is / which are capable of generating electrical energy and provide it to the electronic pen (200).

9. Electronic pen (200) according to any one of the preceding claims, **characterized in that** an electrical conductor path on a circuit carrier of the electronic pen (200) is configured such that it can serve as an antenna for the data transfer module (219, 109).

10. Electronic pen (200) according to any preceding claim, **characterized in that** all position determination sensors (201, 202, 101, 102) comprise acceleration sensors, and / or rotation rate sensors and / or magnetic field sensors.

11. An apparatus for the electronic detection of pen positions, comprising an electronic pen (200) according to any one of the preceding claims, at least one data receiving module for receiving the data transmitted by the data transfer module (219, 109) of the electronic pen (200), an external data processing unit for analyzing and processing the received data, a data display unit and a data storage unit,
**characterized in that**
the data processing unit has an energy management configuration unit, which can be used to configure the energy management unit (218, 110) of the electronic pen.

12. The apparatus of claim 11, further comprising a writing substrate, wherein the writing substrate is a writing paper.

13. A method of operating an electronic pen (200) according to any one of the preceeding claims 1 to 10 comprising:
carrying out at least one change of the operating mode of the electronic pen (200) depending on the force measured by the force sensor (203, 103), in particular in the case of falling below a predetermined pressure force threshold for a predetermined minimum duration and / or in the case of exceeding a predetermined pressure force threshold for a predetermined excess minimum duration.

14. A method according to claim 13, wherein the data transfer rate between the data transfer module (219, 109) and the data receiving module is changed depending on the type of writing substrate.

## Patentansprüche

1. Elektronischer Schreibstift (200) mit Schreibstiftpositionserkennung, umfassend wenigstens eine elektrische Spannungsquelle (206), wenigstens eine digitale Steuereinheit (217, 106), eine Schreibmine (209), wenigstens ein Datenübertragungsmodul (219, 109) und wenigstens zwei Positionsbestimmungssensoren (201, 202, 101, 102) zur Bestimmung der Lage und/oder Bewegung des elektronischen Schreibstiftes (200), sowie einen an die Schreibmine (209), die zum Schreiben auf Papier geeignet ist, gekoppelten Kraftsensor (203, 103),
**dadurch gekennzeichnet, dass**
der elektronische Schreibstift (200) eine mit der digitalen Steuereinheit (217, 106) in Verbindung stehende Energieverwaltungseinheit (218, 110) aufweist zur Verwaltung des elektrischen Energieverbrauchs, insbesondere zur Minimierung des elektrischen Energieverbrauchs, und optional Mittel (103, 104, 105, 204, 205, 212, 213, 214, 215) aufweist, elektrische Energie selbst zu erzeugen,
und wobei die digitale Steuereinheit (217, 106) und/oder die Energieverwaltungseinheit (218, 110) so konfiguriert ist/sind, dass die Abtastraten von datenliefernden Komponenten des elektronischen Schreibstiftes, z.B. die Abtastraten der Positionsbestimmungssensoren (201, 202, 101, 102) und/oder einer Fotozelle (215) und/oder des Kraftsensors (203, 103), und oder die Kommunikationsrate des Datenübertragungsmoduls (219, 109), in Abhängigkeit des Betriebsmodus des elektronischen Schreibstiftes (200) reguliert werden können, und wobei
die Energieverwaltungseinheit (218, 110) so konfiguriert ist, dass sie in Abhängigkeit der vom Kraftsensor (203, 103) gemessenen Kraft, insbesondere bei Unterschreiten einer vorgegebenen Druckkraftschwelle für eine vorgegebene Unterschreitungsmindestdauer und/oder bei Überschreiten einer vorgegebenen Druckkraftschwelle für eine vorgegebene Überschreitungsmindestdauer, die Energieverwaltungseinheit (218, 110) wenigstens einen Wechsel des Betriebsmodus des elektronischen Schreibstiftes (200) durchführt.

2. Elektronischer Schreibstift (200) nach Anspruch 1, **dadurch gekennzeichnet, dass** er so konfiguriert ist, dass er wenigstens folgende drei verschiedene Betriebsmodi mit unterschiedlichem Energieverbrauch aufweist: Aktivmodus (405), Bereitschaftsmodus (404), Ausmodus (401); und die Energieverwaltungseinheit (218, 110) genannte Betriebsmodi verwalten kann und insbesondere Betriebsmodiwechsel steuern kann.

3. Elektronischer Schreibstift (200) nach einem der vorherigen Ansprüche, **dadurch gekennzeichnet, dass** der elektronische Schreibstift (200) wenigstens einen DC-DC-Wandler (107, 108) aufweist.

4. Elektronischer Schreibstift (200) nach einem der vorherigen Ansprüche, **dadurch gekennzeichnet, dass** der elektronische Schreibstift (200) einen zusätzlichen Energiespeicher (111) für selbst erzeugte elektrische Energie aufweist und/oder die elektrische Spannungsquelle (206) so konfiguriert ist, dass sie durch die vom elektronischen Schreibstift (200) selbst erzeugte elektrische Energie aufgeladen werden kann.

5. Elektronischer Schreibstift (200) nach einem der vorherigen Ansprüche, **dadurch gekennzeichnet, dass** er wenigstens eine Fotozelle (215) aufweist, die so konfiguriert ist, dass sie die Lichtintensität in der Umgebung des elektronischen Schreibstiftes (200) messen kann und bei hinreichender Lichtintensität elektrische Energie erzeugen und dem elektronischen Schreibstift (200) zur Verfügung stellen kann.

6. Elektronischer Schreibstift (200) nach einem der vorherigen Ansprüche, **dadurch gekennzeichnet, dass** er wenigstens eine Fotozelle (215) aufweist, die so konfiguriert ist, dass sie die Lichtintensität in der Umgebung des elektronischen Schreibstiftes messen kann und die Energieverwaltungseinheit (218, 110) so konfiguriert ist, dass bei Unterschreiten einer vorgegebenen Lichtintensitätsschwelle bei der wenigstens einen Fotozelle (215) oder bei mehreren Fotozellen für eine vorgegebene Unterschreitungsmindestdauer und/oder bei Überschreiten einer vorgegebenen Lichtintensitätsschwelle für eine Überschreitungsmindestdauer, die Energieverwaltungseinheit (218, 110) wenigstens einen Wechsel des Betriebsmodus des elektronischen Schreibstift (200) durchführt, insbesondere bei einem von der wenigstens eine Fotozelle (215) gemessenen Unterschreiten einer vorgegebenen Lichtintensitätsschwelle für eine vorgegebene Unterschreitungsmindestdauer einen Wechsel vom Aktivmodus in den Ausmodus mit oder ohne Zwischenwechsel in den Bereitschaftsmodus, und/oder insbesondere beim Überschreiten einer vorgegebenen Lichtintensitätsschwelle für eine vorgegebene Überschreitungsmindestdauer einen Wechsel vom Ausmodus in den Aktivmodus oder Bereitschaftsmodus.

7. Elektronischer Schreibstift (200) nach einem der vorherigen Ansprüche, **dadurch gekennzeichnet, dass** die Energieverwaltungseinheit (218, 110) so konfiguriert ist, dass bei Unterschreiten einer vorgegebenen Messaktivitätsschwelle der Positionsbestimmungssensoren für eine vorgegebene Unterschreitungsmindestdauer und/oder bei Überschreiten einer vorgegebenen Messaktivitätsschwelle der Positionsbestimmungssensoren für eine vorgegebene Überschreitungsmindestdauer die Energieverwaltungseinheit (218) wenigstens einen Wechsel des Betriebsmodus des elektronischen Schreibstift (200) durchführt.

8. Elektronischer Schreibstift (200) nach einem der vorherigen Ansprüche, **dadurch gekennzeichnet, dass** er wenigstens eine Solarzelle (214) und/oder wenigstens einen thermoelektrischen Generator (212, 213) und/oder wenigstens einen piezoelektrischen Generator (204, 205) aufweist, welche/welcher elektrische Energie erzeugen und dem elektronischen Schreibstift (200) zur Verfügung stellen kann/können.

9. Elektronischer Schreibstift (200) nach einem der vorherigen Ansprüche, **dadurch gekennzeichnet, dass** eine elektrische Leiterbahn auf einem Schaltungsträger des elektronischen Schreibstiftes (200) so konfiguriert ist, dass sie als Antenne für das Datenübertragungsmodul (219, 109) dienen kann.

10. Elektronischer Schreibstift (200) nach einem der vorherigen Ansprüche, **dadurch gekennzeichnet, dass** alle Positionsbestimmungssensoren (201, 202, 101, 102) sich zusammensetzen aus Beschleunigungssensoren, Drehratensensoren und Magnetfeldsensoren.

11. Vorrichtung zur elektronischen Erkennung von Schreibstiftpositionen, umfassend einen elektronischen Schreibstift (200) nach einem der vorherigen Ansprüche, wenigstens ein Datenempfangsmodul zum Empfang von durch das Datenübertragungsmodul (219, 109) des elektronischen Schreibstiftes (200) ausgesandten Daten, eine externe Datenauswertungseinheit zur Auswertung und Verarbeitung der empfangenen Daten, eine Datenausgabeeinheit und eine Datenspeichereinheit,
**dadurch gekennzeichnet, dass**
die Datenauswertungseinheit eine Energieverwaltungskonfigurationseinheit aufweist, über die die Energieverwaltungseinheit (218, 110) des elektronischen Schreibstiftes konfiguriert werden kann.

12. Vorrichtung nach Anspruch 11, zusätzlich ein Schreibsubstrat umfassend, wobei das Schreibsubstrat ein Schreibpapier ist.

13. Verfahren zum Betrieb eines elektronischen Schreibstiftes (200) nach einem der vorherigen Ansprüche 1 bis 10, umfassend:
Durchführen wenigstens eines Wechsels des Betriebsmodus des elektronischen Schreibstiftes (200) in Abhängigkeit der vom Kraftsensor (203, 103) gemessenen Kraft, insbesondere bei Unterschreiten einer vorgegebenen Druckkraftschwelle für eine vorgegebene Unterschreitungsmindestdauer und/oder bei Überschreiten einer vorgegebenen Druckkraftschwelle für eine vorgegebene Überschreitungsmindestdauer.

14. Verfahren nach Anspruch 13, worin die Datenübertragungsrate zwischen Datenübertragungsmodul (219, 109) und Datenempfangsmodul in Abhängigkeit der Art des Schreibsubstrats verändert wird.

## Revendications

1. Stylo électronique (200) à détection de position de stylo comprenant au moins une source de tension électrique (206), au moins une unité de commande numérique (217, 206), une mine d'écriture (209), au moins un module de transfert de données (219, 209) et au moins deux capteurs de détermination de position (201, 202, 101, 102) pour déterminer la position et/ou un mouvement du stylo électronique (200), un capteur de force (203, 103) couplé à la mine d'écriture (209) qui est adaptée pour écrire sur du papier,
**caractérisé en ce que**
le stylo électronique (200) comprend une unité de gestion d'énergie (218, 110) en communication avec l'unité de commande numérique (217, 106) pour gérer la consommation d'énergie électrique, en particulier pour minimiser la consommation d'énergie électrique, et
comprend, en option, des moyens (103, 104, 105, 204, 205, 212, 213, 214, 215) pour pouvoir générer l'énergie électrique lui-même, et dans lequel l'unité de commande numérique (217, 106) et/ou l'unité de gestion d'énergie (218, 110) est/sont configurée(s) de telle manière que des taux d'échantillonnage de composants du stylo électronique fournissant des données, par exemple les taux d'échantillonnage des capteurs de détermination de position (201, 202, 101, 102) et/ou d'une cellule photo-électrique (215) et/ou du capteur de force (203, 103), et/ou le taux de transfert de données du module de transfert de données (219, 109) peuvent être commandés en fonction du mode de fonctionnement du stylo électronique (200), et dans lequel l'unité de gestion d'énergie (218, 110) est configurée de telle manière que selon la force mesurée par le capteur de force (203, 103), en particulier en cas de passage sous un seuil de force de pression prédéterminé pour une durée minimale prédéterminée et/ou en cas de dépassement d'un seuil de force de pression prédéterminé pour une durée minimale de dépassement prédéterminée, l'unité de gestion d'énergie (218, 110) réalise au moins un changement de mode de fonctionnement du stylo électronique (200).

2. Stylo électronique (200) selon la revendication 1, **caractérisé en ce qu'**il est configuré de telle manière qu'il dispose au moins des trois modes de fonctionnement différents suivants présentant des consommations d'énergie différentes : un mode actif (405), un mode de veille (404), un mode d'arrêt (401) ; et dans lequel l'unité de gestion d'énergie (218, 110) peut gérer lesdits modes de fonctionnement et peut en particulier commander des changements de mode de fonctionnement.

3. Stylo électronique (200) selon l'une quelconque des revendications précédentes, **caractérisé en ce que** le stylo électronique (200) comprend au moins un convertisseur DC/DC (107, 108).

4. Stylo électronique (200) selon l'une quelconque des revendications précédentes, **caractérisé en ce que** le stylo électronique (200) comprend un stockage d'énergie complémentaire pour l'énergie électrique auto-générée, et/ou **en ce que** la source de tension électrique (206) est configurée de telle manière qu'elle peut être rechargée avec l'énergie électrique auto-générée générée par le stylo électronique (200).

5. Stylo électronique (200) selon l'une quelconque des revendications précédentes, **caractérisé en ce qu'**il comprend au moins une cellule photo-électrique (215) qui est configurée de telle manière qu'elle peut mesurer l'intensité lumineuse dans l'environnement du stylo électronique (200) et qui est en outre configurée de telle manière qu'elle peut, en présence d'une intensité lumineuse suffisante, générer de l'énergie électrique et la fournir au stylo électronique (200).

6. Stylo électronique (200) selon l'une quelconque des revendications précédentes, **caractérisé en ce qu'**il comprend au moins une cellule photo-électrique (215) qui est configurée de telle manière qu'elle peut mesurer l'intensité lumineuse dans l'environnement du stylo électronique (200) et **en ce que** l'unité de gestion d'énergie (218, 110) est configurée de telle manière qu'en cas de passage sous un seuil d'intensité lumineuse prédéterminé au niveau de l'au moins une cellule photo-électrique (215) ou de plusieurs cellules photo-électriques pour une durée minimale prédéterminée de passage sous le seuil et/ou en cas de dépassement d'un seuil d'intensité lumineuse prédéterminé pour une durée de dépassement minimale, l'unité de gestion d'énergie (218, 110) réalise au moins un changement de mode de fonctionnement du stylo électronique (200), en particulier lorsque l'au moins une cellule photo-électrique (215) mesurant un passage sous un seuil d'intensité lumineuse prédéterminé pour une période minimale prédéterminée de passage sous le seuil, réalise un passage du mode actif au mode d'arrêt, avec ou sans passage intermédiaire par le mode veille, et/ou, en particulier en cas de dépassement du seuil d'intensité lumineuse prédéterminé pour une durée minimale de dépassement, réalise un passage du mode d'arrêt au mode actif ou au mode veille.

7. Stylo électronique (200) selon l'une quelconque des revendications précédentes, **caractérisé en ce que** l'unité de gestion d'énergie (218, 110) est configurée de telle manière qu'en cas de passage sous un seuil d'activité de mesure prédéterminé des capteurs de détermination de position pour une durée minimale prédéterminée de passage sous le seuil, et/ou en cas de dépassement du seuil d'activité de mesure prédéterminé des capteurs de détermination de position pour une durée minimale de dépassement prédéterminée, l'unité de gestion d'énergie (218, 110) réalise au moins un changement de mode de fonctionnement du stylo électronique (200).

8. Stylo électronique (200) selon l'une quelconque des revendications précédentes, **caractérisé en ce qu'**il comprend au moins une cellule solaire (214), et/ou au moins un générateur thermoélectrique (212, 213), et/ou au moins un générateur piézoélectrique (204, 205) qui est/sont capable(s) de générer de l'énergie électrique et de la fournir au stylo électronique (200).

9. Stylo électronique (200) selon l'une quelconque des revendications précédentes, **caractérisé en ce qu'**un chemin électriquement conducteur sur un support de circuit du stylo électronique (200) est configuré de telle manière qu'il peut servir d'antenne pour le module de transfert de données (219, 109).

10. Stylo électronique (200) selon l'une quelconque des revendications précédentes, **caractérisé en ce que** tous les capteurs de détermination de position (201, 202, 101, 102) comprennent des capteurs d'accélération et/ou des capteurs de vitesse de rotation et/ou des capteurs de champ magnétique.

11. Appareil pour la détection électronique de positions d'un stylo, comprenant un stylo électronique (200) selon l'une quelconque des revendications précédentes, au moins un module de réception de données pour recevoir les données transmises par le module de transfert de données (219, 209) du stylo électronique (200), une unité de traitement de données externe pour analyser et traiter les données reçues, une unité d'affichage de données et une unité de stockage de données,
**caractérisé en ce que**
l'unité de traitement de données comprend une unité de configuration de gestion d'énergie qui peut être utilisée pour configurer l'unité de gestion d'énergie (218, 110) du stylo électronique.

12. Appareil selon la revendication 11, comprend en outre un support d'écriture, dans lequel le support d'écriture est un papier.

13. Procédé de fonctionnement d'un stylo électronique (200) selon l'une quelconque des revendications précédentes 1 à 10, comprenant:
la réalisation d'au moins un changement de mode de fonctionnement du stylo électronique (200) en fonction de la force mesurée par le capteur de force (203, 103), en particulier en cas de passage sous un seuil de force de pression prédéterminé pour une durée minimale prédéterminée et/ou en cas de dépassement d'un seuil de force de pression prédéterminé pour une durée minimale de dépassement prédéterminée.

14. Procédé selon la revendication 13, où le taux de transfert de données entre le module de transfert de données (219, 109) et le module de réception de données est changé en fonction du type de support d'écriture.
